# FASCICULE DE BREVET EUROPEEN

(11) **EP 1 259 146 B1**
(45) Date de publication et mention de la délivrance du brevet: **30.06.2004**
(21) Numéro de dépôt: 01908027.4
(22) Date de dépôt: 21.02.2001
(51) Int. Cl.: A47J 39/00

(54) **DISPOSITIF MODULABLE POUR LA CONSERVATION ET LE RECHAUFFEMENT DE PLATEAUX-REPAS**
MODULARE EINRICHTUNG ZUM KONSERVIEREN UND ZUM AUFWÄRMEN VON SERVIERPLATTEN
ADJUSTABLE DEVICE FOR PRESERVING AND HEATING MEAL TRAYS

(30) Priorité: 24.02.2000 FR 0002366
(43) Date de publication de la demande: 27.11.2002
(73) Titulaire: Italinnova S.A.S Di Grandi Rene Vincent, 22060 Campione d'Italia (IT)
(72) Inventeur: GRANDI, René, Vincent, I-22060 Campione d'Italia (IT)
(74) Mandataire: Maureau, Philippe
(86) Numéro de dépôt international: PCT/IB2001/000228
(87) Numéro de publication internationale: WO 2001/062131

(56) Documents cités:
- WO-A-97/09575
- FR-A- 2 759 890
- GB-A- 2 293 004
- GB-A- 2 297 147
- US-A- 3 160 452
- US-A- 3 205 033
- US-A- 5 159 973

## Description

L'invention a pour objet un dispositif pour la conservation et le réchauffement de plateaux repas avec zones chaudes et zones froides modulables.

Elle se rapporte d'une manière générale aux enceintes mobiles isolées thermiquement constituées d'un caisson inférieur et d'un caisson supérieur sépares par un espace pouvant contenir plusieurs plateaux repas empilés, et comportant deux circuits indépendants traversant les plateaux repas, un circuit de refroidissement et un circuit de réchauffage ou de refroidissement et de réchauffage, ces enceintes étant équipées de moyens de production de frigories communiquant avec au moins l'un des deux circuits, chaque plateau repas comportant des barrières thermiques le divisant en une zone froide et une zone à réchauffer, isolées l'une de l'autre et de l'extérieur, ces zones étant traversées par des canaux verticaux assurant le passage de l'air chaud ou froid.

Il existe à ce jour un grand nombre de systèmes destinés à stocker, transporter et remettre en température les plateaux repas.

Par exemple, le brevet français 2 662 592 décrit un dispositif de distribution de plateaux-repas avec effets frigorifiques d'attente et de réchauffements Intégrés. Il est composé par un module compact et isotherme, formé par l'empilage et la superposition de plateaux-repas et de leur couvercle, le tout étant positionné dans une armoire-support comportant le compresseur générateur des joules ainsi que le système de ventilation qui permet de propulser l'air réfrigéré par des couloirs sur la zone réfrigérée et la zone d'attente formée par la superposition des plateaux. Ces deux zones sont isolées l'une de l'autre par une déformation du couvercle, une résistance électrique située dans chaque couvercle, permettant une remise en température des plats.

Lorsque l'armoire-support est déplacée pour distribuer les plateaux repas, l'alimentation électrique du compresseur doit être interrompue, ce qui exclut toute application de ce type d'armoire à la distribution ces repas à partir d'une centrale de restauration éloignée puisque, très rapidement, l'évaporateur n'est plus en mesure de fournir des frigories.

Un autre brevet français 2 759 890, fait état d'un dispositif pour la conservation de plateaux-repas avec réchauffement localisé. Dans ce dispositif, les moyens de production du froid comprennent, d'une part un accumulateur de frigories dont le fond présente une déformation sensiblement semi - cylindrique, d'autre part, contre la déformation précitée, un organe de régulation constitué par un cylindre horizontal pivotant, comprenant une partie supérieure isolante et une partie inférieure conductrice dans laquelle sont emmanchés des barreaux caloducs, saillants dans la boucle de retour du circuit de refroidissement et, dans l'un des éléments de chaque plateau, une plaque d'échange comportant un premier réseau caloduc dont les échangeurs thermiques sont disposés dans les zones des récipients à refroidir, ce réseau étant muni d'embouts de collecte de frigories disposés dans la branche verticale descendante du circuit de refroidissement.

Le brevet US 3 160 452 décrit une armoire déplaçable pour la conservation de plateaux repas comportant un dispositif de refroidissement et de réchauffage des plateaux repas superposés dans une enceinte isolée. Cette dernière est divisée en deux zones, respectivement, de refroidissement et de réchauffage, par une barrière thermique verticale composée de tronçons superposés, portés par des potences et aptes, chacun, à venir en appui sur une portée ménagée sur les plateaux et décalée par rapport au milieu du plateau. Les potences sont décalées par rapport au plan médian vertical de l'enceinte et portés par un panneau vertical isolant juxtaposé à un panneau isolant sans potence. Le démontage de ces deux panneaux et leur mise en place, à la place de l'autre panneau, permet de modifier les dimensions relatives des zones de refroidissement et de réchauffage, en donnant à chacune d'elles la dimension qu'avait précédemment l'autre zone, mais cette opération nécessite du temps, n'est pas réalisable par le personnel de service et n'est effectuée qu'aux intersaisons.

A notre connaissance aucun système connu ne permet de modifier à la demande l'importance relative des zones chaudes et froides des plateaux-repas.

Le dispositif selon la présente invention a pour objectif de remédier à cet état de choses. Il permet en effet d'adapter selon les besoins les emplacements destinés respectivement aux mets se consommant froids et aux mets se consommant chauds.

Dans ce dispositif, la barrière thermique verticale peut coulisser horizontalement et pour donner aux zones de refroidissement et de réchauffage des dimensions modifiées en fonction des besoins, tandis que chaque plateau repas comporte, sur deux bords opposés, des encoches aptes à recevoir une cloison Isolante amovible, séparant sur le plateau les mets plateau devant être servis chauds de ceux devant être servis froids, et dont le position peut être modifiée pour la faire correspondre avec celle de la barrière thermique.

Les dessins annexés donnent, à titre d'exemple non limitatif, une forme de réalisation de l'objet de l'invention :
La figure 1 représente une coupe horizontale de l'espace contenant les plateaux repas,
la figure 2 est une coupe verticale, vue suivant la flèche F1 de la figure 1, de l'ensemble du dispositif en période de conservation, les deux zones étant refroidies,
la figure 3 représente dans les mêmes conditions le dispositif en période de réchauffement de la zone contenant les mets à consommer chauds,
la figure 4 montre un plateau repas agrandi et vu de dessus,
la figure 5 est une coupe verticale de l'ensemble du dispositif, vu suivant la flèche F2 de la figure 1,
les figures 6 et 7 représentent un élément de la barrière thermique, sans et avec plateau repas en position,
la figure 8 est une vue d'ensemble d'un échangeur de frigories à ailettes,
les figures 9 et 10 représentent, vu de dessus et de face, l'enceinte fixe avec sortie et introduction d'un chariot mobile portant les plateaux-repas.

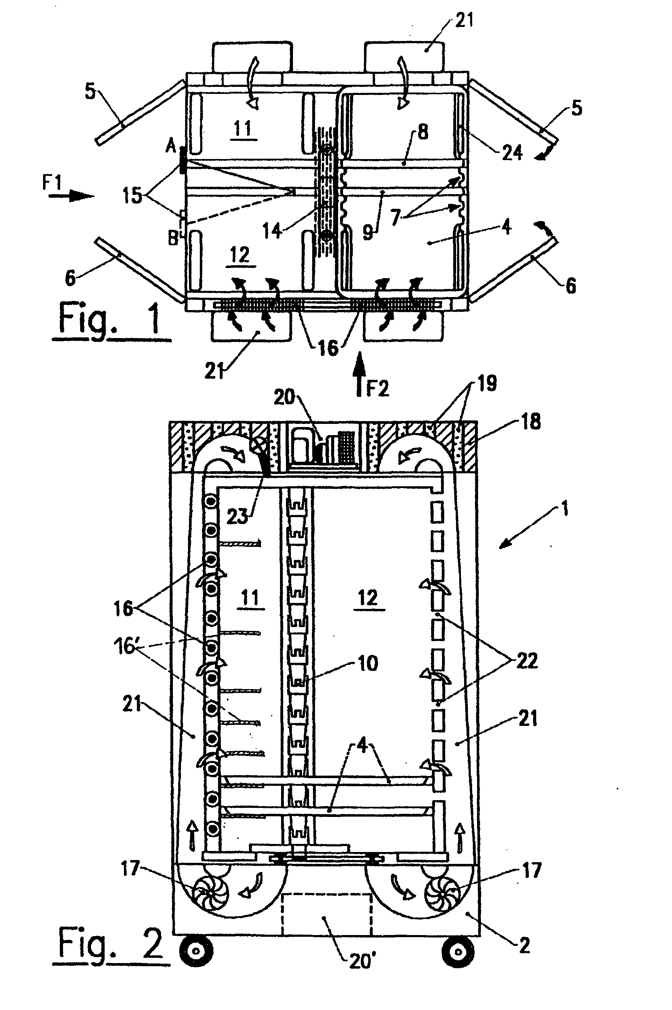

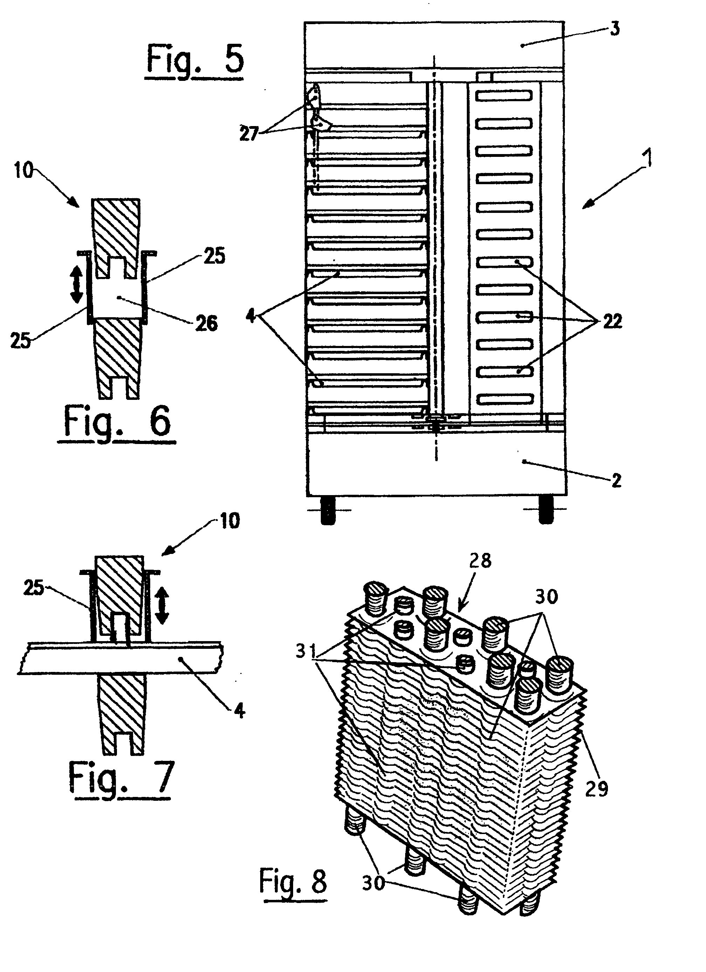

Le dispositif, figures 1 à 8 est constitué d'une enceinte mobile 1 formée d'un caisson inférieur 2 et d'un caisson supérieur 3 entre lesquels se trouve un espace destiné à recevoir des plateaux repas 4 disposés de préférence en deux piles et pouvant être introduits dans l'enceinte ou retirés grâce à des portes 5, 6 disposées sur deux faces opposées de l'enceinte 1.

Les plateaux repas 4 comportent des encoches 7 permettant de disposer une cloison isolante clipsable dans la position demandée (8, 9).

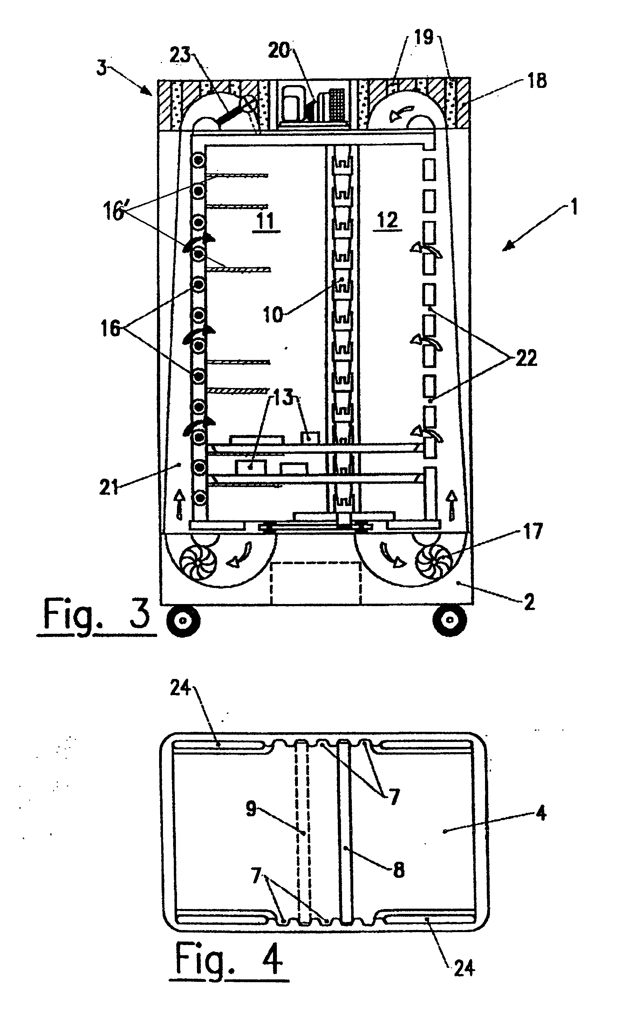

L'enceinte 1 comporte une barrière thermique 10 verticale et mobile, pouvant coulisser horizontalement pour être disposée dans une position correspondant à l'emplacement choisi des cloisons isolantes 8, 9 (figures 2 et 3). Cette barrière thermique définit dans l'espace recevant les plateaux repas deux zones 11, 12 séparées thermiquernent de manière à pouvoir maintenir une température basse dans l'une d'elle, alors que la seconde est portée à une température suffisante pour réchauffer les mets 13 s'y trouvant (figure 3).

Le déplacement de la barrière thermique permet de modifier les dimensions respectives des deux zones 11, 12 en fonction des besoins, par exemple en augmentant la taille de la zone chaude 11 en hiver et en la diminuant en été.

Un dispositif de blocage 14 (figure 1) se trouvant entre les deux piles de plateaux repas 4 est verrouillé par une tirette 15 (A -B), Cette dernière permet de déverrouiller le dispositif de blocage pour permettre la sortie de la barrière thermique 10, portant des réceptacles pour les cloisons isolantes 8, 9 des plateaux repas. Ce déverrouillage permet de sortir la barrière thermique complète ainsi que les résistances 16 utilisées pour réchauffer l'une des zones II, 12, l'ensemble constituant un rack amovible. Ceci étant très important pour le nettoyage parfait du dispositif.

Comme dans le brevet N° FR 2 759 890, le froid est dirigé par une turbine 17 tangentielle ou toute autre turbine adaptée, dans la zone 11 ou 12. Ce froid est produit par un ou plusieurs évaporateurs 18 situés dans le caisson supérieur 3 et comportant chacun un accumulateur de frigories 19 constitué d'une réserve de glycol, de cristaux ou de tout autre produit capable de stocker du froid. L'évaporateur est alimenté par un compresseur frigorifique 20 fonctionnant en temps masqué (par exemple la nuit) pour permettre de stocker dans l'accumulateur 19 des frigories qui seront libérées en temps voulu.

L'accumulateur de frigories 19 sera avantageusement constitué d'un échangeur 28 à ailettes 29 pour la diffusion et la circulation de l'air froid comportant des tubes 30 de circulation du gaz réfrigérant provenant du compresseur 20, 20' disposés alternativement avec des conduits 31 fermés sertis ou soudés contenant un matériau liquide ou solide accumulateur de frigories tel que chlorure de sodium, glycol, alcool antigel ou autre, ce matériau étant refroidi au moment de la circulation du gaz réfrigérant et libère les calories accumulées lors de l'arrêt du compresseur.

Le groupe frigorifique 20 peut être disposé, soit dans le caisson supérieur, soit dans le caisson inférieur (20').

De chaque côté de l'enceinte sont disposées des gaines verticales ou colonnes de compression 21 permettant de compresser l'air froid par des ouvertures 22 dans les zones 11 et 12.

Dans un premier temps, le froid pénètre sur les plateaux repas 4 dans les deux zones.

Dans un second temps, lors de la remise à température, une vanne 23 située dans le caisson supérieur 3 est fermée (figure 3), de façon à empêcher l'air des colonnes de compression 21 du circuit de réchauffement de passer par l'évaporateur 18. Des résistances électriques 16 à ailettes se trouvant face aux plateaux repas 4 s'actionnent, l'air chaud vient chauffer les mets 13 puis est évacué et aspiré par la turbine, repart dans la colonne de compression 21 et redescend avant d'être recyclé.

La vanne 23 est ouverte en froid et refermée en chaud. L'air chaud ou froid redescend par des orifices 24 prévus dans les plateaux repas 4 (figure 4).

Sous une autre forme de réalisation, le chauffage ou réchauffage des mets 13 peut aussi être effectué par des résistances 16 positionnées sous les plats ou plateaux à réchauffer, soit par thermo-contact ou par induction à champ magnétique.

Des lamelles 25 permettent de refermer l'orifice ou lumière 26 de passage des plateaux repas 4 dans la barrière thermique 10 lorsque l'un d'eux est enlevé. Un taquet mobile 27 articulé, provoque l'ouverture de cette lumière et permet de faire pénétrer le plateau sur sa position, avec les cloisons Isolantes 8,9. Les cloisons isolantes 8, 9, des plateaux repas peuvent se démonter facilement pour le nettoyage, les orifices 24 assurent la circulation de l'air chaud ou froid.

Les encoches 7 permettent de positionner la cloison isolante selon le besoin.

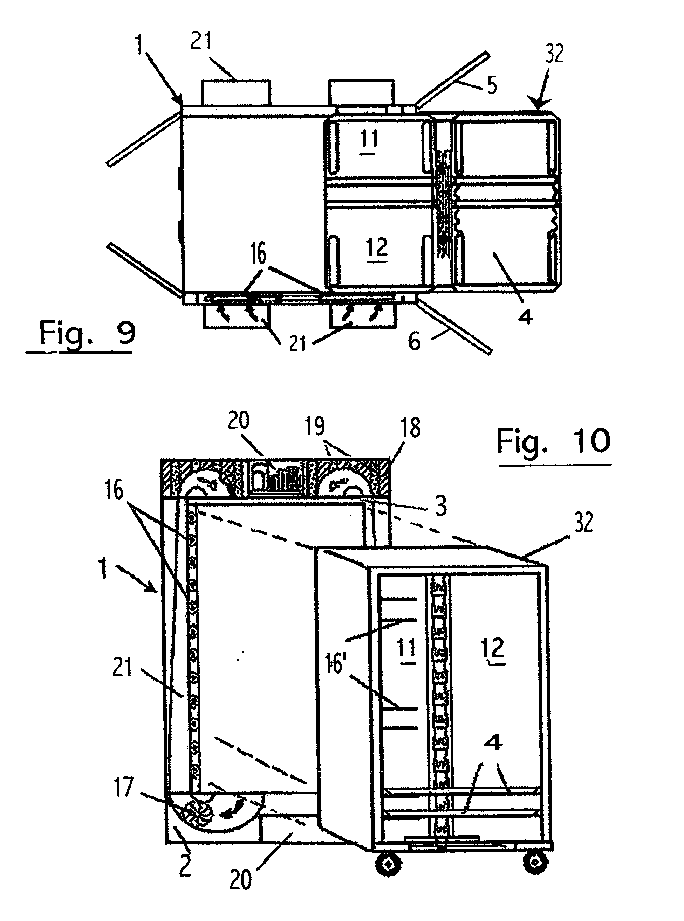

Sur les figures 9 et 10 l'enceinte l est fixe et comporte les colonnes de compression 21, les turbines tangentielles 17, le compresseur frigorifique 20, 20', le ou les évaporateurs 18 à accumulateur de frigories 19 ainsi que les résistances 16 utilisées pour réchauffer l'une des zones 11,12, l'espace entre les caissons, inférieur 2 et supérieur 3, étant entièrement dégagé et agencé pour recevoir un chariot 32 mobile portant les plateaux-repas 4, lesquels, selon l'option de chauffe choisie, sont positionnés sur une résistance 16' à thermo-contact ou induction.

Le positionnement des divers éléments constitutifs donne à l'objet de l'invention un maximum d'effets utiles qui n'avaient pas été à ce jour obtenus par des dispositifs similaires.

De même que les formes, les dimensions et dispositions des différents éléments pourront varier dans la limite des équivalents, comme d'ailleurs les matières utilisées sans pour cela changer l'invention qui vient être décrite.

## Revendications

1. Dispositif pour la conservation et le réchauffement de plateaux repas avec zones chaudes et froides modulables, constitué d'une enceinte (1), fixe ou mobile,isolée thermiquement et comprenant un caisson inférieur (2) et un caisson supérieur (3) séparés par un espace pouvant contenir plusieurs plateaux repas (4) superposés et comportant deux circuits indépendants traversant ces plateaux repas, à savoir, un circuit de refroidissement et un circuit de réchauffage ou de refroidissement et de réchauffage, ces deux circuits étant disposés de part et d'autre d'une barrière thermique verticale(10) composée d'éléments coopérant avec les plateaux et pouvant être déplacée pour modifier les dimensions relatives des zones (11, 12), respectivement, de refroidissement et de réchauffement ou refroidissement et réchauffement, **caractérisé en ce que** la barrière thermique verticale (10) peut coulisser horizontalement pour donner aux dites zones des dimensions modifiées en fonction des besoins, tandis que chaque plateau repas (4) comporte, sur deux bords opposés, des encoches (7) aptes à recevoir une cloison Isolante amovible (8, 9) séparant les mets (13) du plateau devant être servis chauds de ceux devant être servis froids et dont le position peut être modifiée pour la faire correspondre avec celle de la barrière thermique (10).

2. Dispositif selon la revendication 1, **se caractérisant par le fait que** l'enceinte (1) comporte des gaines verticales ou colonnes de compression (21) permettant, grâce à des turbines (17), de compresser l'air chaud ou froid par des ouvertures (22) dans les zones (11 et 12), cet air passant à travers les plateaux repas (4) par des orifices (24).

3. Dispositif selon la revendication 1 **se caractérisant par le fait que** le froid est produit au moyen d'un compresseur frigorifique (20, 20') disposé dans le caisson supérieur (3) ou le caisson inférieur (2), ledit compresseur alimentant au moins un évaporateur (18) situé dans le caisson supérieur (3) et comportant un accumulateur de frigorie (19).

4. Dispositif selon la revendication 1, **se caractérisant par le fait que** le circuit de réchauffement comporte une vanne (23) située dans le caisson supérieur (3) et agencée de manière à empêcher, lorsqu'elle est fermée, l'air des colonnes de compression (21) de passer par l'évaporateur (18), des résistances électriques (16) à ailettes disposées face aux plateaux repas (4) permettant alors de chauffer l'air qui réchauffe les mets (13) puis est évacué et aspiré par la turbine (17), repart dans la colonne de compression (21) et redescend avant d'être recyclé.

5. Dispositif selon la revendication 1, **se caractérisant par le fait que** la barrière thermique (10), portant des réceptacles pour les cloisons isolantes (8, 9) des plateaux repas (4) et les résistances (16) utilisées pour réchauffer l'une des zones (11,12), constitue un ensemble amovible pouvant être sorti de l'enceinte (1), cet ensemble étant maintenu en place par un dispositif de blocage (14) verrouillé par une tirette (15).

6. Dispositif selon la revendication 1, **se caractérisant par le fait que** l'enceinte (1) est fixe et comporte les colonnes de compression (21), les turbines (17), le compresseur frigorifique (20, 20'), le ou les évaporateurs (18) à accumulateur de frigories (19) ainsi que les résistances (16,16') utilisées pour réchauffer l'une des zones (11,12) ou directement, sous les plateaux-repas (4) ; l'espace entre les caissons, inférieur (2) et supérieur (3), étant entièrement dégagé et agencé pour recevoir un chariot portant les plateaux-repas (4).

7. Dispositif selon la revendication 1 **se caractérisant par le fait que** des lamelles (25) permettent de refermer l'orifice ou lumière (26) de passage des plateaux repas (4) ménagé dans la barrière thermique (10) lorsque l'un d'eux est enlevé, un taquet mobile (27) articulé provoque l'ouverture de cette lumière et permet de faire pénétrer le plateau sur sa position, avec les cloisons isolantes (8, 9).

8. Dispositif selon la revendication 1 **se caractérisant par le fait que** les plateaux repas (4) sont disposés en deux piles et peuvent être introduits dans l'enceinte (1) ou retirés grâce à des portes (5, 6), disposées sur deux faces opposées de ladite enceinte.

## Patentansprüche

1. Vorrichtung zum Aufbewahren und Aufwärmen von Servierplatten mit verstellbaren warmen und kalten Bereichen, bestehend aus einem feststehenden oder beweglichen, wärmegedämmten Behälter (1), der einen unteren Kasten (2) und einen oberen Kasten (3) umfasst, die durch einen Raum getrennt sind, der mehrere übereinander gelagerte Servierplatten (4) enthalten kann und zwei unabhängige Kreisläufe umfasst, die die Servierplatten durchlaufen, nämlich einen Kühlkreislauf und einen Aufwärmkreislauf oder einen Kühl- und Aufwärmkreislauf, wobei diese zwei Kreisläufe zu beiden Seiten einer vertikalen thermischen Barriere (10) angeordnet sind, die aus Elementen zusammengesetzt ist, die mit den Platten zusammenarbeiten und bewegt werden können, um die Größenverhältnisse des Kühlbereichs und des Aufwärmbereichs bzw. des Kühlund Aufwärmbereichs (11, 12) zu ändern,
**dadurch gekennzeichnet, dass** die vertikale thermische Barriere (10) horizontal gleiten kann, um die besagten Bereiche bedarfsabhängig im Größenverhältnis zu ändern, während jede Servierplatte (4) auf zwei gegenüberliegenden Rändern Kerben (7) umfasst, die geeignet sind, eine wegnehmbare isolierende Trennwand (8, 9) aufzunehmen, die die Speisen (13) der Platte, die warm serviert werden müssen, von denen trennt, die kalt serviert werden müssen, und deren Position geändert werden kann, damit sie mit der Position der thermischen Barriere (10) übereinstimmt.

2. Vorrichtung nach Anspruch 1,
**dadurch gekennzeichnet, dass** der Behälter (1) vertikale Mäntel oder Verdichtungssäulen (21) umfasst, die es gestatten, dank der Turbinen (17) die warme oder kalte Luft durch Öffnungen (22) in den Bereichen (11 und 12) zu verdichten, wobei diese luft die Servierplatten (4) durch Löcher (24) passiert

3. Vorrichtung nach Anspruch 1,
**dadurch gekennzeichnet, dass** die Kälte mit Hilfe eines Kältemittelverdichters (20, 20') hergestellt wird, der im oberen Kasten (3) oder unteren Kasten (2) angeordnet ist, wobei der Verdichter wenigstens einen Evaporator (18) versorgt, der im oberen Kasten (3) angeordnet ist und einen Kälteakkumulator (19) umfasst.

4. Vorrichtung nach Anspruch 1,
**dadurch gekennzeichnet, dass** der Aufwärmkreislauf ein Ventil (23) umfasst, das im oberen Kasten (3) angeordnet ist und so ausgebildet ist, dass es die Luft der Verdichtungssäulen (21) daran hindert, durch den Evaporator (18) zu laufen, wenn es geschlossen ist, wobei elektrische Widerstände (16) mit Rippen, die gegenüber den Servierplatten (4) angeordnet sind, es dann erlauben, die Luft, die die Speisen (13) aufwärmt, zu erwärmen, die dann hinausgeschleust wird und von der Turbine (17) angesaugt wird, und dann wieder in die Verdichtungssäulen (21) zurückkehrt und wieder absteigt, bevor sie wiederverwendet wird.

5. Vorrichtung nach Anspruch 1,
**dadurch gekennzeichnet, dass** die thermische Barriere (10), die die Aufnahmen für die isolierenden Trennwände (8, 9) der Servierplatten (4) und die Widerstände (16) trägt, die zum Aufwärmen eines der Bereiche (11, 12) verwendet werden, eine wegnehmbare Einheit bildet, die aus dem Behälter (1) herausgenommen werden kann, wobei diese Einheit durch eine von einer Zugvorrichtung (15) verriegelten Blockiervorrichtung (14) festgehalten wird.

6. Vorrichtung nach Anspruch 1,
**dadurch gekennzeichnet, dass** der Behälter (1) feststehend ist und die Verdichtungssäulen (21), die Turbinen (17), den Kältemittelverdichter (20, 20'). den oder die Evaporatoren (18) mit Kälteakkumulatoren (19) sowie die Widerstände (16, 16') umfasst, die verwendet werden, um einen der Bereiche (11, 12) aufzuwärmen oder zum direkten Aufwärmen unter den Servierplatten (4); wobei der Raum zwischen dem unteren (2) und oberen (3) Kasten ganz freigegeben ist und so angeordnet ist, dass er einen Wagen aufnimmt, der die Servierplatten trägt (4).

7. Vorrichtung nach Anspruch 1,
**dadurch gekennzeichnet, dass** Lamellen (25) es gestatten, die Öffnung oder das Loch (26) zum Durchgang der Servierplatten (4) wieder zu verschließen, welche(s) in der thermischen Barriere (10) angeordnet ist, wenn eine von ihnen weggenommen ist und ein angelenkter beweglicher Daumen (27) bewirkt das Öffnen dieses Lochs und erlaubt es, dass die Platte auf ihrer Position mit den isolierenden Trennwänden (8, 9) eindringt

8. Vorrichtung nach Anspruch 1,
**dadurch gekennzeichnet, dass** die Servierplatten (4) in zwei Stapeln angeordnet sind und durch Türen (5, 6), die auf zwei gegenüberliegenden Seiten des Behälters angeordnet sind, in den Behälter (1) eingeführt und herausgenommen werden können.

## Claims

1. Device for the preservation and reheating of tray meals with adjustable hot and cold regions, which consists of a thermally insulated, stationary or movable, chamber (1) comprising a lower box (2) and an upper box (3) separated by a space able to contain several superposed tray meals (4) and having, passing through these tray meals, two independent circuits, namely a cooling circuit and a reheating or cooling and reheating circuit, these two circuits being arranged on either side of a vertical thermal barrier (10) composed of elements cooperating with the trays and able to be displaced to modify the relative dimensions of the cooling, and reheating or cooling and reheating regions (11, 12), respectively, **characterised in that** the vertical thermal barrier (10) can slide horizontally to give the said regions dimensions modified according to requirements, while each tray meal (4) has, on two opposite edges, notches (7) capable of receiving a removable insulating partition (8, 9) which separates the dishes (13) on the tray to be served hot from those to be served cold and the position of which can be modified in order to make it correspond with that of the thermal barrier (10).

2. Device according to Claim 1, **characterised in that** the chamber (1) has vertical ducts or compression columns (21) making it possible, by means of turbines (17), to compress the hot or cold air through openings (22) into the regions (11 and 12), this air passing through the tray meals (4) via orifices (24).

3. Device according to Claim 1, **characterised in that** the cold is produced by means of a refrigerating compressor (20, 20') arranged in the upper box (3) or the lower box (2), the said compressor supplying at least one evaporator (18) which is located in the upper box (3) and has a cold accumulator (19).

4. Device according to Claim 1, **characterised in that** the reheating circuit has a valve (23) located in the upper box (3) and designed so as to prevent, when it is closed, the air from the compression columns (21) from passing through the evaporator (18), finned electrical resistors (16) arranged facing the tray meals (4) thus making it possible to heat the air, which reheats the dishes (13), and is then extracted and sucked out by the turbine (17), returns to the compression column (21) and redescends before being recycled.

5. Device according to Claim 1, **characterised in that** the thermal barrier (10), carrying receptacles for the insulating partitions (8, 9) of the tray meals (4) and the resistors (16) used for reheating one of the regions (11, 12), constitutes a removable assembly which can be removed from the chamber (1), this assembly being held in place by a locking device (14) locked by a pull cord (15).

6. Device according to Claim 1, **characterised in that** the chamber (1) is stationary and comprises the compression columns (21); the turbines (17), the refrigerating compressor (20, 20'), the evaporator or evaporators (18) with a cold accumulator (19) and the resistors (16, 16') used for reheating one of the regions (11, 12) or directly under the tray meals (4), the space between the lower box (2) and the upper box (3) being entirely clear and designed to receive a trolley carrying the tray meals (4).

7. Device according to Claim 1, **characterised in that** slats (25) make it possible, when one of the tray meals (4) is removed, to close off the orifice or slot (26) made in the thermal barrier (10) for the passage of the tray meals (4), an articulated movable catch (27) causes this slot to open and allows the tray, with the insulating partitions (8, 9), to be inserted into its position.

8. Device according to Claim 1, **characterised in that** the tray meals (4) are arranged in two stacks and can be introduced into the chamber (1) or removed therefrom by means of doors (5, 6) arranged on two opposite sides of the said chamber.
